# EUROPÄISCHE PATENTSCHRIFT

(11) **EP 1 048 360 B1**
(45) Veröffentlichungstag und Bekanntmachung des Hinweises auf die Patenterteilung: **05.03.2008**
(21) Anmeldenummer: 00109285.7
(22) Anmeldetag: 28.04.2000
(51) Int. Cl.: B05B 7/14, F01N 3/20, B01D 53/90, B01D 53/94

(54) **Vorrichtung und Verfahren zum Einbringen eines festen Ausgangsmaterials eines Reduktionsmittels eines Stickoxids in ein Abgas**
Device and process for metering a solid source of reducing agent for nitrogen oxide into an exhaust gas
Dispositif et procédé pour le dosage d'une substance de base solide à action réductive sur l'oxyde d'azote dans un gaz d'échappement

(30) Priorität: 30.04.1999 DE 19919913
(43) Veröffentlichungstag der Anmeldung: 02.11.2000
(73) Patentinhaber: Argillon GmbH, 96257 Redwitz (DE)
(72) Erfinder: Preu, Gabriele, 81667 München (DE); Oechsner, Matthias, 81677 München (DE)
(74) Vertreter: Tergau & Pohl Patentanwälte

(56) Entgegenhaltungen:
- EP-A- 0 615 777
- DE-A- 4 423 003
- US-A- 2 941 841

## Beschreibung

Die Erfindung betrifft eine Vorrichtung zum Einbringen eines festen Ausgangsmaterials eines Reduktionsmittels eines Stickoxids in ein Abgas durch eine Dosieröffnung. Eine derartige Vorrichtung geht aus EP 0 615 777 A1 hervor. Neben der Vorrichtung wird ein Verfahren zum Einbringen eines gasförmigen Reduktionsmittels in ein Abgas angegeben.

Bei einer Verbrennung eines fossilen Energieträgers in Anwesenheit von Luft entsteht als ein unerwünschtes Nebenprodukt Stickoxid. Im Hinblick auf eine Umweltverträglichkeit der Verbrennung ist es wünschenswert, eine Bildung dieses Stickoxids zu unterbinden bzw. das Stickoxid nachträglich aus einem Abgas der Verbrennung zu entfernen. Die nachträgliche Entfernung des Stickoxids geschieht beispielsweise dadurch, daß dem Abgas ein Reduktionsmittel für das Stickoxid beigemengt wird. Ein derartiges Verfahren und eine entsprechende Vorrichtung gehen beispielsweise aus EP 0 615 777 A1 hervor. Dabei wird pulverförmiger Harnstoff mit Hilfe eines Präzisionsdosiergerätes in das Abgas eindosiert. In einem relativ komplizierten Verfahren wird mit Hilfe einer Preßluft und einer Zerstäuberdüse zunächst ein transportfähiges Feststoffluftgemisch (Aerosol) gebildet. Dieses Aerosol wird dem Abgas zugeführt. Auf einer Oberfläche eines Hydrolysekatalysators für Harnstoff wird (in Gegenwart von Wasser des Abgases) aus dem Harnstoff in einer Hydrolyse Ammoniak gebildet. Das gebildete Ammoniak fungiert als Reduktionsmittel des Stickoxids. Mit Hilfe eines zweiten Katalysators wird Stickoxid mit Ammoniak zu molekularem Stickstoff und Kohlendioxid umgesetzt.

Aus der DE 44 23 003 A1 sind ein Verfahren und eine Vorrichtung zum Reduzieren von NOx in den Abgasen bei der Verbrennung in einem Kraftfahrzeug-Motor zu entnehmen. Dabei wird ein pulverartiges reduzierendes Agen über einen trichterförmigen Verteiler und ein rotierendes Verteilerrad in die Motorgase zugegeben.

Aufgabe der vorliegenden Erfindung ist es, eine Vorrichtung anzugeben, mit deren Hilfe ein festes Ausgangsmaterial eines Reduktionsmittels von Stickoxiden definiert und auf einfache Weise einem Abgas zugeführt werden kann.

Zur Lösung der Aufgabe wird eine Vorrichtung zum Einbringen eines festen Ausgangsmaterials eines Reduktionsmittels eines Stickoxids in ein in einem Auspuffrohr strömendes Abgas durch mindestens eine Dosieröffnung angegeben, dadurch gekennzeichnet, daß die Vorrichtung ein Mittel zu einem Verändern eines Durchmessers der Dosieröffnung aufweist.

Das Abgas ist beispielsweise das Abgas einer Verbrennungsmaschine, insbesondere eines Diesel- oder Ottomotors. Das Abgas kann auch das Abgas eines fossil befeuerten Kraftwerks sein. Bei der Verbrennung kann sowohl ein fossiler Energieträger (z.B. Erdgas) als auch ein nicht-fossiler Energieträger (z.B. Wasserstoff) oxidiert werden.

Das Reduktionsmittel ist insbesondere gasförmig. Beispielsweise ist das Reduktionsmittel Ammoniak, das Stickoxide mit Hilfe eines Katalysators zu molekularem Stickstoff reduziert. Das Ausgangsmaterial von Ammoniak ist beispielsweise Harnstoff. Durch die Dosieröffnung gelangt das Ausgangsmaterial des Reduktionsmittels in das Abgas. Dies ist beispielsweise so realisiert, daß ein Vorratsbehälter mit einem Vorrat des Ausgangsmaterial und ein Auspuffrohr mit dem Abgas so aneinander angeordnet sind, daß das Ausgangsmaterial aufgrund der Schwerkraft durch die Dosieröffnung in das Auspuffrohr rieselt. Denkbar ist ebenfalls, daß das Ausgangsmaterial in das Auspuffrohr hineingeblasen oder gesaugt wird. Bei einer Temperatur des Auspuffrohrs von 350 °C bis 600°C erfolgt im Auspuffrohr eine Umsetzung des Harnstoffs in Ammoniak.

Der Vorratsbehälter kann fest oder trennbar mit dem Auspuffrohr verbunden sein. Beispielsweise ist der Vorratsbehälter am Auspuffrohr angeschweißt, angeschraubt oder aufgesteckt.

Der Vorratsbehälter kann auch mittelbar über einen Hohlkörper in Form eines Anschlußstücks an das Auspuffrohr angeschlossen sein. Bei einer derartigen Anordnung gelangt das Ausgangsmaterial vom Vorratsbehälter durch das Anschlußstück in das Abgas des Auspuffrohrs.

Die grundlegende Idee der Erfindung liegt darin, eine Dosieröffnung zum Einbringen des Ausgangsmaterials anzubieten, die einen variablen Durchmesser aufweist. Durch eine Veränderung des Durchmessers der Dosieröffnung kann eine Menge des Ausgangsmaterial festgelegt werden, die in das Abgas eingebracht wird.

Im Hinblick auf eine effiziente Bildung des Reduktionsmittels weist die Vorrichtung vorzugsweise eine Vielzahl derartiger Dosieröffnungen auf. Die Form einer Dosieröffnung ist dabei frei, sie kann oval, rund oder jede andere denkbare Form annehmen. Die Durchmesser der Dosieröffnungen sind insbesondere so bemessen, daß ein Partikel des Ausgangsmaterials in das Abgas gelangt, der im Abgas vollständig zersetzt wird. Beispielsweise hat ein Partikel ein Partikelgröße von einigen µm. Eine Einschränkung der Partikelgröße gibt es nicht. Partikel mit größeren Durchmessern haben beispielsweise den Vorteil, daß sie eine im Vergleich zum Volumen kleine Oberfläche aufweisen. Bei Verwendung eines hygroskopischen Ausgangsmaterials kann das Ausgangsmaterial leichter gelagert werden.

Die Dosieröffnung mit variablen Durchmesser bzw. das Mittel zum Verändern des Durchmessers kann im Vorratsbehälter, dem Anschlußstück oder in einer Wandung des Auspuffrohres integriert sein.

Ein Material des Mittels zum Verändern des Durchmessers ist vorzugsweise inert gegen das Ausgangsmaterial. Ebenso ist es günstig, wenn das Material inert gegen das gebildete Reduktionsmittel und gegen ein Reaktionsprodukt der Reduktion ist.

Das Mittel zu einem Verändern des Durchmessers der Dosieröffnung ist beispielsweise eine Blende mit einer einstellbaren Blendenöffnung.

In einer besonderen Ausgestaltung weist das Mittel zum Verändern des Durchmessers der Dosieröffnung einen ersten Körper mit mindestens einem ersten Loch und mindestens einen zweiten Körper mit mindestens einem zweiten Loch auf. Der ersten Körper und der zweite Körper sind so aneinander angeordnet, daß die Dosieröffnung durch das erste und das zweite Loch gebildet ist.

Ein Loch durchdringt den Körper in einer Richtung, so daß eine Lochblende realisiert ist. Ein Körper ist vorzugsweise eine Platte. Ein Loch durchdringt die Platte dabei in Dickenrichtung. Eine erste und eine zweite Platte sind beispielsweise mit ihren Hauptflächen parallel zueinander so angeordnet, daß das Ausgangsmaterial durch die ersten Löcher der ersten Platte und durch die zweiten Löcher der zweiten Platte rieselt. Die ersten Löcher und die zweiten Löcher können eine gleiche Form aufweisen. Sie können aber auch unterschiedlich geformt sein. Beispielsweise sind die ersten Löcher der ersten Platte kreisrund und die zweiten Löcher der zweiten Platte ringförmig. Die Platten sind mit jeweils einer Hauptfläche formschlüssig aneinander oder in einem Abstand zueinander angeordnet. Der Abstand ist beispielsweise kleiner als eine Partikelgröße des Ausgangsmaterials. Dadurch wird verhindert, daß sich Ausgangsmaterial zwischen den Platten ansammelt.

Durch eine Stellung des ersten und des zweiten Körpers bzw. der ersten und der zweiten Löcher zueinander sind die Durchmesser der Dosieröffnungen festgelegt. Ein Verändern des Durchmessers der Dosieröffnung ist beispielsweise dadurch möglich, daß die Körper gegeneinander bewegbar bzw. verschiebbar gelagert sind.

In einer besonderen Ausgestaltung der Erfindung ist eine Platte eine Scheibe mit einem Drehpunkt. Der Drehpunkt ist beispielsweise der Mittelpunkt der Scheibe. Die Scheibe ist um den Drehpunkt drehbar gelagert. Es kann nur eine Scheibe derart gelagert sein, es können aber auch mehrere Scheiben auf diese Weise gelagert sein. Durch eine Bewegung der Scheiben um ihren jeweiligen Drehpunkt wird ein Durchmesser einer Dosieröffnung eingestellt und somit eine Menge an Ausgangsmaterial festgelegt, die in das Abgas eingebracht wird.

In einer weiteren Ausgestaltung der Erfindung ist mindestens ein Körper an einem Vorrat des Ausgangsmaterials angeordnet. Der Vorrat des Ausgangsmaterials befindet sich beispielsweise in einem Vorratsbehälter. Beispielsweise steht ein Körper mit einer Seite, die die Löcher aufweist, in einem direkten Kontakt mit dem Vorrat des Ausgangsmaterials.

In einer weiteren Ausgestaltung der Vorrichtung ist ein Mittel zum Zerkleinern des Ausgangsmaterials vorhanden. Zu einem exakten Einbringen bzw. Eindosieren des Ausgangsmaterials wird das Ausgangsmaterial in einer Partikelgröße von wenigen µm eingebracht. Die Löcher der Körper sind entsprechend dimensioniert. Damit das Ausgangsmaterial die Löcher bzw. die Dosieröffnung passieren kann, weist es eine Partikelgröße auf, die kleiner ist als ein Durchmesser der Dosieröffnung. Dies gewährleistet das Mittel zum Zerkleinern des Ausgangsmaterials.

Das Mittel zum Zerkleinern des Ausgangsmaterials ist beispielsweise ein Mahlwerk, das direkt im Vorratsbehälter oder zwischen Vorratsbehälter und Dosieröffnung angebracht ist.

In einer weiteren Ausgestaltung der Erfindung ist das Mittel zum Zerkleinern mindestens eine Zacke, die in den Vorrat des Ausgangsmaterials ragt. Durch eine Bewegung der Zacke wird das Ausgangsmaterial zerkleinert bzw. festes Ausgangsmaterial von einem beispielsweise verdichteten Ausgangsmaterial abgekratzt. Eine Form der Zacke ist beliebig. Die Zacke ist beispielsweise stiftförmig.

Die Zacke ist vorzugsweise an einem Loch angeordnet, insbesondere an einem Loch des Körpers, der mit dem Vorrat an Ausgangsmaterial in Kontakt steht. An einem Loch können mehrere Zacken angeordnet sein. Ein Körper mit einer Vielzahl von Löchern und Zacken ist beispielsweise ein Reibe. Die Reibe weist beispielsweise die Form einer Muskatreibe oder die Form einer Kartoffelreibe auf.

Zu einer Gewährleistung einer Rieselfähigkeit des Ausgangsmaterials kann der Vorratsbehälter für das Ausgangsmaterial mit einem Trockenmittel ausgestattet sein.

In einer besonderen Ausgestaltung der Erfindung ist ein Mittel zu einer Kontrolle des Vorrats des Ausgangsmaterials vorhanden. Mit diesen Mitteln wird beispielsweise eine Qualität des Ausgangsmaterials geprüft. Beispielsweise ist es günstig, wenn ein Wassergehalt des Ausgangsmaterials möglichst niedrig ist, um die Rieselfähigkeit des Ausgangsmaterials zu gewährleisten. Eine Bestimmung des Wassergehalts gelingt beispielsweise mit Hilfe einer Absorptions- bzw. Reflexionsmessung. Bei einer Absorptionsmessung wird der Vorrat des Ausgangsmaterials mit Infrarotlicht bestrahlt, das von Wasser absorbiert wird. Aufgrund der gemessenen Absorption kann auf den Wassergehalt des Vorrats geschlossen werden. Ist der Wassergehalt zu groß, kann der Vorrat des Ausgangsmaterials verklumpt sein. In diesem Fall kann ein Austauschen des Vorrats vorteilhaft sein.

Mit Hilfe der Vorrichtung zu einer Kontrolle des Ausgangsmaterials kann auch eine Menge an vorhandenem Ausgangsmaterial festgestellt werden. Dieses Mittel ist beispielsweise eine am Vorratsbehälter angebrachte Lichtschranke. Sobald der Vorrat im Vorratsbehälter unter ein durch die Lichtschranke festgelegtes Niveau sinkt, wird angezeigt, daß sich der vorhandene Vorrat an Ausgangsmaterials dem Ende neigt. Es muß Ausgangsmaterial nachgefüllt werden. Ist der Vorratsbehälter abnehmbar befestigt, kann beispielsweise ein Austausch eines leeren Vorratsbehälters gegen einen gefüllten Vorratsbehälter vorgenommen werden. Durch mehrere Lichtschranken gelingt es, einen fortschreitenden Verbrauch an Ausgangsmaterial zu verfolgen.

Gemäß einem weiteren Aspekt der Erfindung wird ein Verfahren zum Einbringen mindestens eines festen Ausgangsmaterials mindestens eines Reduktionsmittels eines Stickoxids in ein Abgas durch mindestens eine Dosieröffnung mit einem veränderbaren Durchmesser angegeben. Dazu wird insbesondere eine zuvor beschriebene Vorrichtung verwendet. Das Verfahren weist folgende Schritte auf: Bestimmen einer für eine Reduktion des Stickoxids benötigten Menge des Ausgangsmaterials und Verändern des Durchmessers der Dosieröffnung entsprechend der benötigten Menge des Ausgangsmaterials.

Das Bestimmen der benötigten Menge des Ausgangsmaterials beinhaltet insbesondere ein Messen eines Gehalts an Stickoxid im Abgas bzw. Gasgemisch. Dies gelingt beispielsweise mit einem Stickoxidsensor. Der Stickoxidsensor mißt beispielsweise die Menge an Stickoxiden, die nach Verlassen des Katalysators zur Umsetzung von Stickoxiden in Stickstoffkohlendioxid noch vorhanden sind. Der Stickoxidsensor kann auch zum Messen des Gehalt an Stickoxiden im Abgas vor dem Katalysator herangezogen werden. Entsprechend einem Signal des Stickoxidsensors wird die Menge an Ausgangsmaterial festgelegt, die in das Gasgemisch eingebracht werden soll.

In einer besonderen Ausgestaltung der Erfindung bilden ein erstes Loch eines ersten Körpers und mindestens ein zweites Loch mindestens eines zweiten Körpers die Dosieröffnung mit einem veränderbaren Durchmesser. Das Verändern des Durchmessers erfolgt durch ein Bewegen mindestens eines der Körper. Beispielsweise wird ein Körper in Form einer Platte in eine bestimmte Richtung gegenüber einer zweiten Platte in einer Richtung verschoben.

In einer besonderen Ausgestaltung der Erfindung wird als Körper eine Scheibe verwendet. Das Bewegen des Körpers erfolgt durch ein Drehen der Scheibe um einen Drehpunkt der Scheibe. Vorzugsweise ist der Drehpunkt der Scheibe im Mittelpunkt der Scheibe angeordnet. Durch das Drehen der Scheibe wird der Durchmesser der Dosieröffnung verändert.

In einer besonderen Ausgestaltung der Erfindung erfolgt das Drehen der Scheibe mit einer konstanten Geschwindigkeit.

Besonders vorteilhaft ist es, wenn die Scheibe mit dem Vorrat an Ausgangsmaterial in Kontakt gebracht wird. Ist die Scheibe mit Zacken ausgestaltet und ragen die Zacken in den Vorrat an Ausgangsmaterial, so wird automatisch durch das Drehen der Scheibe ein Zerkleinern bzw. Abtragen des Ausgangsmaterials durchgeführt. Das zerkleinerte Ausgangsmaterial rieselt beispielsweise durch die ersten Löcher der ersten Scheibe und gelangt durch die zweiten Löcher der zweiten Scheibe in das Abgas.

Zu einem exakten Verändern des Durchmessers der Dosieröffnung kann zumindest ein beweglich gelagerter Körper angesteutert und somit eine Positionierung des Löcher des Körpers gegenüber den Löchern eines weiteren Körpers festgelegt werden. Dies gelingt beispielsweise mit einer Schrittmotorsteuerung.

Als Reduktionsmittel wird insbesondere ein mindestens ein Stickstoffatom aufweisendes Reduktionsmittel wie Ammoniak benutzt. Es kann aber auch ein aliphatisches Ammoniakderivat sein. Als Ausgangsmaterial wird insbesondere Harnstoff verwendet. Mit Harnstoff verbindet sich der Vorteil, daß Harnstoff bei einer Temperatur zwischen 350° C und 600° C zu Ammoniak und Kohlendioxid umgesetzt wird. Diese Temperaturen herrschen beispielsweise im Auspuffrohr eines Personenkraftwagens.

Andere Ausgangsmaterialien von Ammoniak wie beispielsweise Ammoniumcarbonat, Ammoniumcarbamat, Amonniumhydrogencarbonat, Ammoniumformiat, Ammoniumoxalat, Ammoniumhydroxid, Cyanursäure, Harnstoff-Formaldehyd, Melamin sowie Mischungen dieser Verbindungen sind ebenfalls denkbar.

Dabei können auch andere Reduktionsmittel als Ammoniak gebildet werden. Cyanursäure kann beispielsweise bei den Temperaturen des Abgases zu Cyansäure umgesetzt werden, das ebenfalls als Reduktionsmittel von Stickoxiden fungieren kann.

Mit der Erfindung verbinden sich folgende Vorteile:
- Als Reduktionsmittel von Stickoxiden kann Ammoniak eingesetzt werden. Mit Hilfe eines Katalysators wird Ammoniak mit Stickoxiden zu Kohlendioxid und molekularem Stickstoff umgesetzt. Die Reaktionsprodukte sind umweltverträglich.
- Als Ausgangsmaterial kann Harnstoff eingesetzt werden. Harnstoff setzt sich unter den Bedingungen des Abgases vollkommen in Kohlendioxid und Ammoniak um. Durch eine einfache Prozeßführung kann gewährleistet werden, daß die Umwelt nicht durch zusätzliche unerwünschte Reaktionsprodukte belastet wird.
- Harnstoff ist billig und weist eine hohe Umweltverträglichkeit auf.
- Ein Austausch des Vorratsbehälters und damit ein Nachtanken des Ausgangsmaterials des Reduktionsmittel ist problemlos möglich.
- Eine exakte Dosierung des festen Ausgangsmaterials und damit des Reduktionsmittels von Stickoxiden gelingt auf einfache und billige Weise.

Anhand mehrerer Ausführungsbeispiele und der dazugehörigen Zeichnungen wird im folgenden eine Vorrichtung zum Einbringen eines festen Ausgangsmaterials eines Reduktionsmittels von Stickoxid in ein Gasgemisch und ein entsprechendes Verfahren vorgestellt. Die Figuren sind schematisch und stellen keine maßstabsgetreuen Abbildungen dar.
Figur 1 zeigt ein Mittel zum Verändern des Durchmessers einer Dosieröffnung von oben.
Figuren 2a und 2b zeigen jeweils einen Ausschnitt eines Platte mit einer Vielzahl von Löchern von oben.
Figur 3 zeigt in einem Querschnitt eine Platte mit Löchern, an denen Zacken angeordnet sind.
Figur 4 zeigt eine Scheibe mit einem Drehpunkt in der Mitte der Scheibe von oben
Figur 5 zeigt in einem Querschnitt ein Auspuffrohr einer Verbrennungsmaschine.
Figur 6 zeigt ein Ablaufdiagramm eines Verfahrens, nachdem das Ausgangsmaterial in das Abgas eingebracht wird.

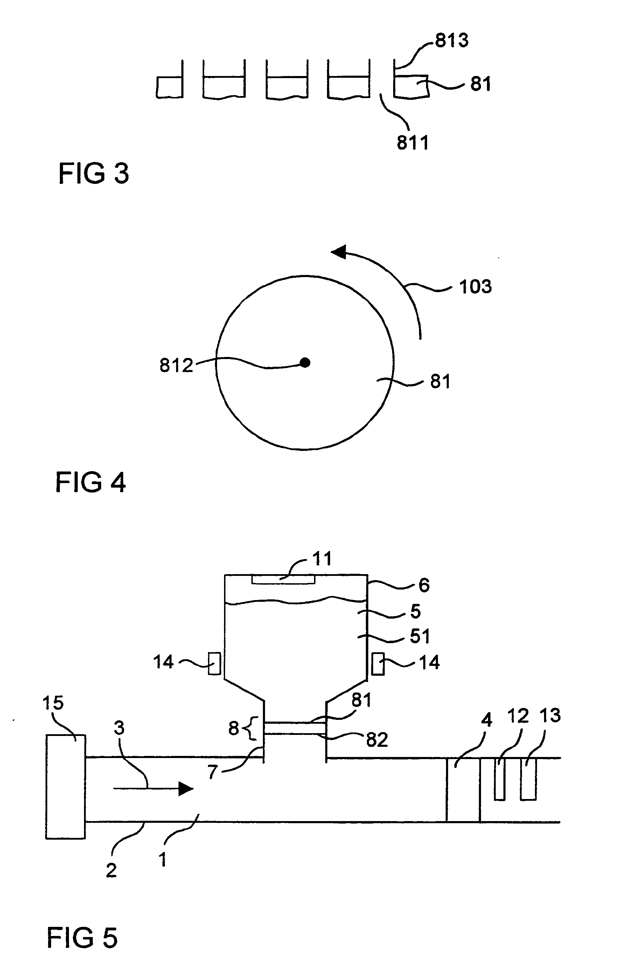

Ausgangspunkt ist ein Abgas 1 eines Dieselmotors 15. Das Abgas 1 wird durch ein Auspuffrohr 2 in Strömungsrichtung 3 bewegt (Figur 5). Im Abgas 1 sind aufgrund der Verbrennung in Gegenwart von molekularem Stickstoff Stickoxide enthalten. Diese Stickoxide werden mit Hilfe eines Katalysators 4 und Ammoniak als Reduktionsmittel aus dem Abgas 1 entfernt. Dazu wird pulverförmiger Harnstoff 5 vor dem Katalysator 4 in das Auspuffrohr 2 mit dem Abgas 1 eingebracht.

Ein Vorrat 51 des Harnstoffs 5 befindet sich in einem Vorratsbehälter 6, der über ein Anschlußstück 7 an das Auspuffrohr 2 angeschlossen ist. Der Vorratsbehälter 6 ist an das Anschlußstück 7 angeschraubt, das seinerseits an das Auspuffrohr 2 angeschweißt ist. Das Anschlußstück 7 ist ein Hohlkörper, durch den der Harnstoff 5 in das Abgas 1 des Auspuffrohres 2 gelangt. Anschlußstück 7 , Vorratsbehälter 6 und Auspuffrohr 2 sind so angeordnet, daß der Harnstoff 5 aufgrund der Schwerkraft in das Auspuffrohr 2 gelangt.

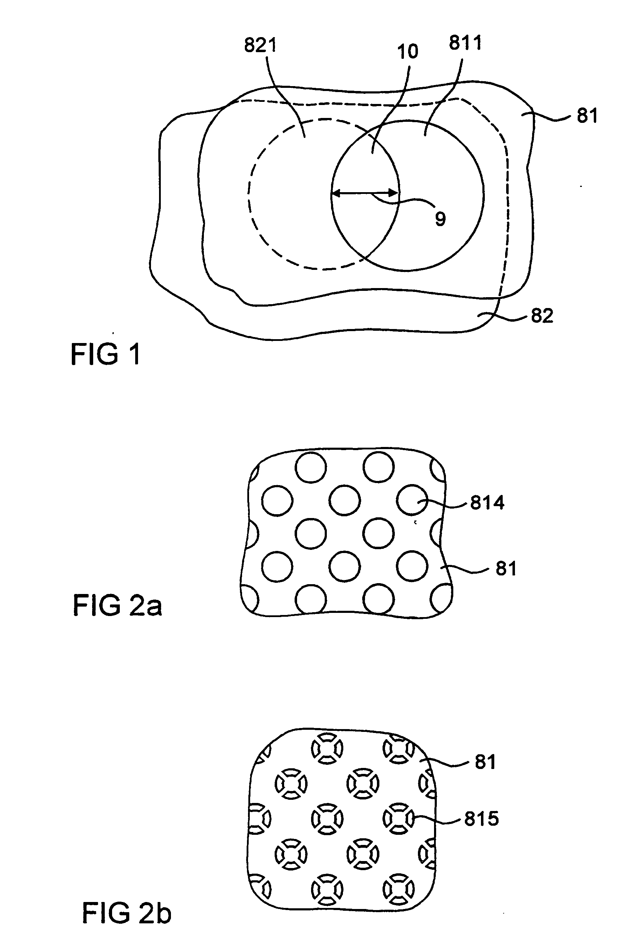

Im Anschlußstück 7 befindet sich die Vorrichtung zum Einbringen des Harnstoffs 5 mit einem Mittel 8 zum Verändern eines Durchmessers 9 der Öffnung 10. Das Mittel 8 besteht aus zwei Scheiben 81 und 82 mit runden Löchern 811 und 821 (Lochblenden, Figur 1). Ein Loch hat einen Lochdurchmesser von ca. 50 µm. Die Scheiben 81 und 82 sind so übereinander angeordnet, daß die ersten Löcher 811 der ersten Scheibe 81 und die zweiten Löcher 821 der zweiten Scheibe 82 die Öffnungen 10 mit variablen Durchmessern 9 bilden. Eine erste Scheibe 81 steht mit dem Vorrat 51 Harnstoffs 5 direkt in Kontakt. Diese Scheibe 81 ist drehbar um einen Drehpunkt 812 in der Mitte der Scheibe 81 gelagert (Figur 4). Durch Drehen der ersten Scheibe 81 verändern sich die Durchmesser 9 der Öffnungen 10. Zudem Verfügt die Scheibe 81 über Zacken 813, die direkt an den Löchern 811 der Scheibe 81 angeordnet sind (Figur 3). Die Zacken 813 zerkleinern beim Drehen 103 der Scheibe 81 vorhandene größere Partikel an Harnstoff 5, die nicht durch die Dosieröffnungen 10 passen würden.

Im Vorratsbehälter 6 ist ein Trockenmittel 11 vorhanden. Das Trockenmittel 11 sorgt dafür, daß ein Wassergehalt des Harnstoffs 5 so gering ist, daß der Harnstoff 5 rieselfähig ist. Das Trockenmittel 11 weist Silikagel auf.

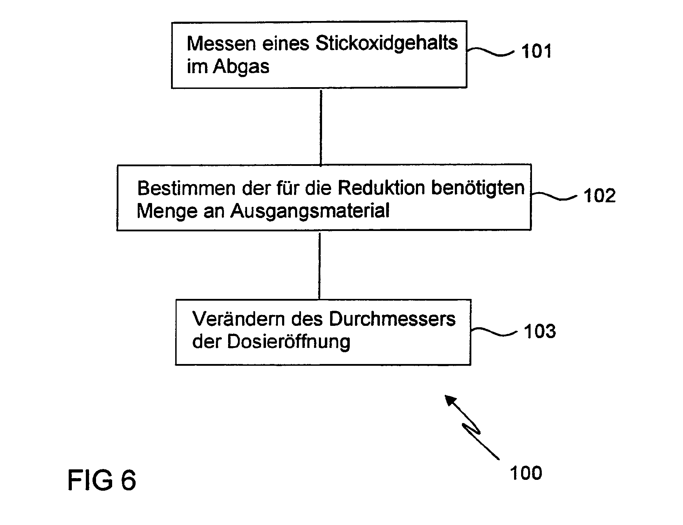

Zur Durchführung des Verfahrens 100 (Figur 6) zum Einbringen von pulverförmigen Harnstoff 5 in das Abgas 1 ist nach dem Katalysator 4 ein Gassensor 12 für Stickoxide angeordnet (Figur 5).

Folgender Regelungsablauf findet beim Einbringen des Harnstoffs in das Abgas 1 statt: Ausgangspunkt ist ein Start des Dieselmotors 15. Mit dem Start wird ein Messen 101 von Stickoxid im Abgas 1 in Gang gesetzt. Mit Hilfe des Gassensors 12 wird ein Gehalt an Stickoxiden im Abgas 1 untersucht. Im Schritt 102 wird entsprechend dem Gehalt die ins Abgas 1 einzubringende Menge an Harnstoff 5 bestimmt. Im Schritt 103 wird die erste Scheibe 81 gegenüber der zweiten Scheibe 81 gedreht und somit der Durchmesser 9 der Dosieröffnungen 10 verändert. Ist der Gehalt an Stickoxiden zu hoch, wird der Durchmesser 9 erhöht und die Dosieröffnung 10 vergrößert. Durch die vergrößerte Dosieröffnung 10 wird mehr Harnstoff 5 in das Abgas 1 des Auspuffrohres 2 eingebracht. Es wird mehr Harnstoff 5 zu Ammoniak umgesetzt, was zu einer Verringerung des Gehalts an Stickoxiden im Abgas 1 führt. Verringert sich der Gehalt an Stickoxiden im Abgas 1, so wird der Druchmesser 9 der Dosieröffnung 10 durch Verdrehen der ersten Scheibe 81 verkleinert. Es gelangt weniger Harnstoff 5 in das Abgas 1.

In einem weiteren Ausführungsbeispiel ist ein weiterer Gassensor 13 nach dem Katalysator 4 vorgesehen, der einen Gehalt an Ammoniak im Abgas 1 bestimmt. Dieser Gehalt wird ebenfalls zur Regelung der Menge an Harnstoff 5 herangezogen, die in das Abgas 1 eingebracht wird.

In einer weiteren Ausführungsform ist auch die zweite Scheibe 82 drehbar um einen Drehpunkt in der Mitte der zweiten Scheibe 82 gelagert.

Eine weitere Ausführungsform unterscheidet sich durch die Form der Löcher 811 und 821 der Scheiben 81 und 82. Dabei sind die Löcher der ersten und der zweiten Scheibe quasi komplementär gestaltet. Die ersten Löcher 811 der ersten Scheibe 81 sind kreisrunde Löcher 814. Die zweiten Löcher 821 der zweiten Scheibe 82 sind als segmentierte Ringe 815 ausgebildet.

Eine weitere Ausführungsform verfügt überdies über ein Mittel 14 zur Kontrolle eines Vorrats 51 an Harnstoff 5. Dieses Mittel ist eine Lichtschranke, bestehend aus einer Licht emittierenden Photodiode und einem das Licht registrierenden Photodetektor. Die Lichtschranke 14 ist am Vorratsbehälter 6 angeordnet. Zwischen Photodiode und Photodetektor befindet sich der Vorrat 51 des Harnstoffs. Sobald der Vorrat 51 an Harnstoff 5 unter ein bestimmtes Niveau sinkt, wird ein Signal generiert, das dem Betreiber anzeigt, daß eine bestimmte Menge an vorhandenem Harnstoff 5 unterschritten ist. Im folgenden wird Harnstoff 5 in den Vorratsbehälter 6 nachgefüllt. Nachdem der Vorratsbehälter am Anschlußstück angeschraubt ist, wird in einer weiteren Ausführungsform der leere Vorratsbehälter 6 gegen einen neuen, mit Harnstoff 5 gefüllten Vorratsbehälter 6 ausgetauscht.

## Patentansprüche

1. Vorrichtung zum Einbringen eines festen Ausgangsmaterials (5) eines Reduktionsmittels eines Stickoxids in ein in einem Auspuffrohr strömendes Abgas (1) durch mindestens eine Dosieröffnung (10), **dadurch gekennzeichnet, daß** die Vorrichtung ein Mittel (8) zu einem Verändern eines Durchmessers (9) der Dosieröffnung (10) aufweist.

2. Vorrichtung nach Anspruch 1, wobei das Mittel (8) zu einem Verändern des Durchmessers (9) der Dosieröffnung (10) einen ersten Körper (81) mit mindestens einem ersten Loch (811) und mindestens einen zweiten Körper (82) mit mindestens einem zweiten Loch (821) aufweist und der erste Körper (81) und der zweite Körper (82) so aneinander angeordnet sind, daß die Dosieröffnung (10) durch das erste (811) und das zweite Loch (821) gebildet ist.

3. Vorrichtung nach Anspruch 2, wobei mindestens ein Körper (81, 82) eine Platte ist.

4. Vorrichtung nach Anspruch 3, wobei die Platte eine Scheibe (81) mit einem Drehpunkt (812) ist.

5. Vorrichtung nach einem der Ansprüche 2 bis 4, wobei mindestens ein Körper (81, 82) an einem Vorrat (51) des Ausgangsmaterials (5) angeordnet ist.

6. Vorrichtung nach einem der Anspruch 1 bis 5, wobei ein Mittel (813) zum Zerkleinern des Ausgangsmaterials (5) vorhanden ist.

7. Vorrichtung nach Anspruch 6, wobei das Mittel (813) zum Zerkleinern mindestens eine Zacke ist, die in einen Vorrat (51) des Ausgangsmaterials (5) ragt.

8. Vorrichtung nach einem der Anspruch 7, wobei die Zacke (813) an einem Loch (811, 821) angeordnet ist.

9. Vorrichtung nach einem der Ansprüche 1 bis 8, wobei ein Mittel (14) zu einer Kontrolle des Vorrats (51) des Ausgangsmaterials (5) vorhanden ist.

10. Verfahren zum Einbringen mindestens eines festen Ausgangsmaterials (5) mindestens eines Reduktionsmittels eines Stickoxids in ein Abgas (1) durch mindestens eine Dosieröffnung (10) mit einem veränderbaren Durchmesser (9), insbesondere Verfahren unter Verwendung einer Vorrichtung nach einem der Ansprüche 1 bis 9, mit folgenden Schritten:
a) Bestimmen einer für eine Reduktion des Stickoxids benötigten Menge des Ausgangsmaterials und
b) Verändern des Durchmessers der Dosieröffnung entsprechend der benötigten Menge des Ausgangsmaterials.

11. Verfahren nach Anspruch 10, wobei das Bestimmen der benötigten Menge des Ausgangsmaterials ein Messen eines Gehalts an Stickoxid im Abgas beinhaltet.

12. Verfahren nach Anspruch 10 oder 11, wobei mindestens ein erstes Loch (811) eines ersten Körpers (81) und mindestens ein zweites Loch (821) mindestens eines zweiten Körpers (82) die Dosieröffnung (10) mit einem veränderbaren Durchmesser (9) bilden und das Verändern des Durchmessers (9) durch ein Bewegen mindestens eines Körpers (81, 82) erfolgt.

13. Verfahren nach Anspruch 12, wobei als Körper (81) eine Scheibe verwendet wird und das Bewegen des Körpers (81) durch ein Drehen (103) der Scheibe (81) um einen Drehpunkt (812) der Scheibe (81) erfolgt.

14. Verfahren nach Anspruch 13, wobei das Drehen (103) mit einer konstanten Geschwindigkeit erfolgt.

15. Verfahren nach Anspruch 12 oder 14, wobei die Scheibe (81) mit dem Vorrat (51) des Ausgangsmaterial (5) in Kontakt gebracht wird.

16. Verfahren nach einem der Ansprüche 10 bis 15, wobei ein pulverförmiges Ausgangsmaterial (5) verwendet wird.

17. Verfahren nach einem der Ansprüche 10 bis 16, wobei ein Ausgangsmaterial (5) verwendet wird, aus dem ein mindestens ein Stickstoffatom aufweisendes Reduktionsmittel gebildet wird.

18. Verfahren nach Anspruch 17, wobei ein Ausgangsmaterial (5) verwendet wird, aus dem Ammoniak gebildet wird.

19. Verfahren nach Anspruch 17 oder 18, wobei als Ausgangsmaterial (5) Harnstoff verwendet wird.

## Claims

1. Device for introducing through at least one metering opening (10) a solid source material (5) of a reducing agent for nitrogen oxide into an exhaust gas (1) flowing in an exhaust pipe, **characterized in that** the device has a means (8) for changing a diameter (9) of the metering opening (10).

2. Device according to Claim 1, the means (8) for changing the diameter (9) of the metering opening (10) having a first body (81) with at least one first hole (811) and at least one second body (82) with at least one second hole (821) and the first body (81) and the second body (82) being arranged one near the other in such a way that the metering opening (10) is formed by the first hole (811) and the second hole (821).

3. Device according to Claim 2, at least one body (81, 82) being a plate.

4. Device according to Claim 3, the plate being a disc (81) with a point of rotation (812).

5. Device according to one of Claims 2 to 4, at least one body (81, 82) being arranged at a store (51) of the source material (5).

6. Device according to one of Claims 1 to 5, a means (813) for comminuting the source material (5) being present.

7. Device according to Claim 6, the comminuting means (813) being at least one tine which protrudes into a store (51) of the source material.

8. Device according to Claim 7, the tine (813) being arranged at a hole (811, 821).

9. Device according to one of Claims 1 to 8, a means (14) for keeping a check on the store (51) of the source material (5) being present.

10. Process for introducing at least one solid source material (5) of at least one reducing agent for nitrogen oxide into an exhaust gas (1) through at least one metering opening (10) with a changeable diameter (9), in particular a process using a device according to one of Claims 1 to 9, with the following steps:
a) determining an amount of the source material that is required for a reduction of the nitrogen oxide and
b) changing the diameter of the metering opening in a way corresponding to the required amount of the source material.

11. Process according to Claim 10, the determining of the required amount of source material comprising measuring a content of nitrogen oxide in the exhaust gas.

12. Process according to Claim 10 or 11, at least one first hole (811) of a first body (81) and at least one second hole (821) of at least one second body (82) forming the metering opening (10) with a changeable diameter (9) and the changing of the diameter (9) being performed by moving at least one body (81, 82).

13. Process according to Claim 12, a disc being used as the body (81) and the moving of the body (81) being performed by rotating (103) the disc (81) about a point of rotation (812) of the disc (81).

14. Process according to Claim 13, the rotating (103) being performed at a constant speed.

15. Process according to Claim 12 or 14, the disc (81) being brought into contact with the store (51) of the source material (5).

16. Process according to one of Claims 10 to 15, a powdered source material (5) being used.

17. Process according to one of Claims 10 to 16, a source material (5) from which a reducing agent having at least one nitrogen atom is formed being used.

18. Process according to Claim 17, a source material (5) from which ammonia is formed being used.

19. Process according to Claim 17 or 18, urea being used as the source material (5).

## Revendications

1. Dispositif pour l'introduction d'un matériau de départ solide (5), d'un agent de réduction d'un oxyde d'azote dans des gaz d'échappement s'écoulant dans un tuyau d'échappement (1) à travers au moins une ouverture de dosage (10), **caractérisé en ce que** le dispositif présente un moyen (8) pour une modification d'un diamètre (9) de l'ouverture de dosage (10).

2. Dispositif selon la revendication 1, dans lequel le moyen (8) pour une modification du diamètre (9) de l'ouverture de dosage (10) présente un premier corps (81) avec au moins un premier trou (811) et au moins un second corps (82) avec au moins un second trou (821) et le premier corps (81) et le second corps (82) sont disposés l'un par rapport à l'autre de telle sorte que l'ouverture de dosage (10) est formée par le premier (811) et le second trou (821).

3. Dispositif selon la revendication (2), dans lequel au moins un corps (81, 82) est une plaque.

4. Dispositif selon la revendication (3), dans lequel la plaque est un disque (81) avec un centre de rotation (812).

5. Dispositif selon l'une quelconque des revendications 2 à 4, dans lequel au moins un corps (81, 82) est disposé sur une réserve (51) du matériau de départ (5).

6. Dispositif selon l'une quelconque des revendications 1 à 5, dans lequel un moyen (813) est présent pour broyer le matériau de départ (5).

7. Dispositif selon la revendication 6, dans lequel le moyen (813) pour broyer est au moins une pointe qui fait saillie dans une réserve (51) du matériau de départ (5).

8. Dispositif selon la revendication 7, dans lequel la pointe (813) est disposée sur un trou (811, 821).

9. Dispositif selon l'une quelconque des revendications 1 à 8, dans lequel un moyen (14) est présent pour un contrôle de la réserve (51) du matériau de départ (5).

10. Procédé pour l'introduction d'au moins un matériau de départ solide (5), d'au moins un agent de réduction d'un oxyde d'azote dans des gaz d'échappement (1) à travers au moins une ouverture de dosage (10) avec un diamètre modifiable (9), en particulier un procédé utilisant un dispositif selon l'une quelconque des revendications 1 à 9, avec les étapes suivantes :
a) de détermination d'une quantité du matériau de départ nécessaire pour une réduction de l'oxyde d'azote et
b) de modification du diamètre de l'ouverture de dosage correspondant à la quantité nécessaire du matériau de départ.

11. Procédé selon la revendication 10, dans lequel la détermination de la quantité nécessaire du matériau de départ comporte une mesure d'une teneur en oxyde d'azote dans les gaz d'échappement.

12. Procédé selon la revendication 10 ou la revendication 11, dans lequel au moins un premier trou (811) d'un premier corps (81) et au moins un second trou (821) d'au moins un second corps (82) forment l'ouverture de dosage (10) avec un diamètre modifiable (9) et la modification du diamètre (9) est réalisée par un déplacement d'au moins un corps (81, 82).

13. Procédé selon la revendication 12, dans lequel on utilise comme corps (81) un disque et le déplacement du corps (81) est réalisé par une rotation (103) du disque (81) autour d'un centre de rotation (812) du disque (81).

14. Procédé selon la revendication 13, dans lequel la rotation (103) est réalisée avec une vitesse constante.

15. Procédé selon la revendication 12 ou 14, dans lequel le disque (81) est mis en contact avec la réserve (51) du matériau de départ (5).

16. Procédé selon l'une quelconque des revendications 10 à 15, dans lequel on utilise un matériau de départ pulvérulent (5).

17. Procédé selon l'une quelconque des revendications 10 à 16, dans lequel on utilise un matériau de départ (5) à partir duquel est formé un agent de réduction présentant au moins un atome d'azote.

18. Procédé selon la revendication 17, dans lequel on utilise un matériau de départ (5) à partir duquel est formé de l'ammoniac.

19. Procédé selon la revendication 17 ou 18, dans lequel on utilise comme matériau de départ (5) de l'urée.
